# EUROPEAN PATENT APPLICATION

(11) **EP 1 428 725 A1**
(43) Date of publication of application: **16.06.2004**
(21) Application number: 03257772.8
(22) Date of filing: 10.12.2003
(51) Int. Cl.: B60R 13/00, H01H 13/12

(54) **Sealed switch arrangement, especially for a vehicle boot**

(30) Priority: 13.12.2002 GB 0229103
(71) Applicant: ITT MANUFACTURING ENTERPRISES, INC., Wilmington, Delaware 19801 (US)
(72) Inventor: Dew, Timothy Paul, Kettering NN15 7LX (GB); Hemming, Colin, Desborough NN14 2UD (GB)
(74) Representative: Ertl, Nicholas Justin

(57) **Abstract**

A sealed switch arrangement for mounting on a surface (12) for example a vehicle boot, has a substrate (14) with a circuit board (18) mounted on the substrate (14) and having at least one pair of switch contacts (20). A cover (22) is provided over the circuit board (18) and is attached to the substrate (14) to define a sealed chamber over the contact surface, the cover (22) having a deformable portion (26) over the at least one pair of switch contacts (20) and which carries a terminal (30), the deformable portion (26) being movable such that the terminal (30) can make or break electrical connection between the at least one pair of switch contacts (20). The arrangement can be made as a slim component, with little movement needed to make electrical contact.

## Description

This invention relates to switch arrangements, and in particular to a switch arrangement which can be mounted on a surface outdoors, with the electrical connections to the switch passing through the surface. One preferred use of the switch arrangement of the invention is as a combined vehicle badge and switch for actuating the opening of the vehicle boot.

It has been proposed to integrate a switch function into a vehicle badge, for example in DE 199 25 006 A1.

A difficulty in designing such a component is ensuring the arrangement does not leak as well as making the design as simple and reliable as possible.

According to the invention, there is provided a sealed switch arrangement for mounting on a surface, comprising:
a substrate;
a contact surface mounted on the substrate and having at least one pair of switch contacts, electrical connections being made to the switch contacts through the substrate; and
a cover over the contact surface and attached to the substrate to define a sealed chamber over the contact surface, the cover having a deformable portion over the at least one pair of switch contacts and which carries a terminal, the deformable portion being movable such that the terminal can make or break electrical connection between the at least one pair of switch contacts.

In this arrangement, the substrate enables the arrangement to be sealingly mounted on a surface. The arrangement can be made as a slim component, with little movement needed to make electrical contact. The switch components are housed in a chamber defined by two components, so that the design is simple and reliable. The substrate may be made from silicone rubber.

The contact surface can comprise a printed circuit board, having a plurality of pairs of switch contacts. The cover then carries a corresponding number of terminals, so that each terminal can make contact between a pair of contacts. The contacts may all be for the same electrical connection (i.e. they can be in parallel) or they can be for different electrical connections.

The printed circuit board is preferably mounted in a first recess in the substrate, the electrical connections to the switch contacts passing through the substrate beneath the recess. This enables the overall thickness to be kept to a minimum. The substrate may then have a second recess corresponding in shape to the cover. Thus, the cover can be seated in a first outer recess, and within the area of this recess, a further recess houses the printed circuit board. The arrangement can then be arranged to have substantially uniform thickness.

The cover can comprise an annular web, the deformable portion comprising a dome shaped portion supported by the web. The web then provides stability and can be bonded to the outer recess in the substrate. The dome portion provides the part to be pressed to enable electrical contact to be made or broken.

A vent channel is preferably provided in the web to enable venting of the sealed chamber. This channel preferably points downwardly when the switch arrangement is mounted onto a surface.

The cover can extend laterally beyond the substrate, so that the cover provides the seal with the surface on which the switch arrangement is to be mounted. In this way, a single component defines the sealed chamber in which the switch components are to be mounted.

The substrate can then be received in a recess in the underside of the cover, such that the bottom surface of the substrate and the bottom surface of the cover, where the cover extends beyond the substrate, define a substantially continuous contact surface.

An outer casing can be provided over the substrate. The outer casing may have an opening over the deformable portion. A push pad is then provided in the opening over the deformable portion.

The cover or the substrate may be formed from a resilient sealing material extending between the outer casing and the surface. In this way, a seal is provided between the outer casing and the surface.

In a preferred use of the arrangement, the outer casing forms a vehicle badge. The switch can then be for actuating the opening of the boot of the vehicle, for example.

The arrangement may be for mounting on a non-horizontal surface in which case a vent channel provided in the web of the cover is located such that, once mounted, liquid is unable to accumulate inside the sealed chamber.

Examples of the invention will now be described in detail with reference to the accompanying drawings, in which:
Figure 1 shows a first example of switch arrangement of the invention;
Figure 2 shows a cover used in the arrangement of Figure 1;
Figure 3 shows a printed circuit board used in the arrangement of Figure 1;
Figure 4 shows in plan view the main components of the switch arrangement;
Figure 5 shows a second example of switch arrangement of the invention; and
Figure 6 shows a vehicle with a boot actuated by the switch arrangement of the invention.

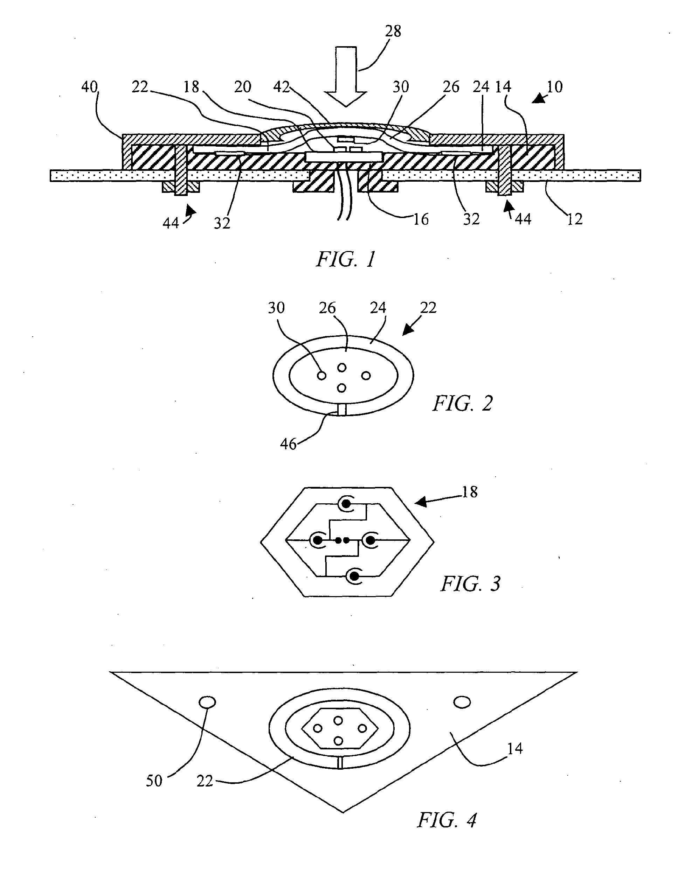

Figure 1 shows a switch arrangement 10 of the invention for mounting on a surface 12 which may, for example, be a car body panel.

The switch arrangement 10 comprises a substrate 14 to be mounted flush against the surface 12. A first recess 16 in the substrate 14 receives a printed circuit board 18 having at least one pair of switch contacts 20. The function of the switch arrangement is to make contact between the switch contacts 20 to provide a control command, for example a command to open the boot of a vehicle on which the switch arrangement 10 is mounted.

The switch contacts 20 are located within a chamber defined between the substrate 14 and a cover 22. The cover 22 has an outer web 24 and a central dome portion 26. When the dome portion 26 is pressed in the direction of arrow 28 it can be deformed towards the switch contacts 20. The dome portion 26 carries a connection terminal 30 which is then brought into contact with the two switch contacts 20 to make an electrical connection.

The cover 22 and the substrate 14 are bonded together by adhesive points or an annular ring of adhesive material 32.

In this way, the electrical parts of the switch are mounted in a sealed chamber.

The switch arrangement sits underneath a car badge which is arranged as a fixed outer portion 40 and a moveable central portion 42 which is actuated as shown by arrow 28.

The central portion 42 may be bonded to the cover 22 and simply slide up and down within an opening in the outer portion 40. Alternatively, and not shown in Figure 1, a lip arrangement may be provided for limiting the upward movement of the centre portion 42, with the cover 22 biasing the centre portion 42 into its uppermost position. The vehicle badge is fixed to the surface 12, for example with nuts and bolts 44, which clamp the complete assembly into place.

The substrate 14 is made from silicone rubber, and it provides a seal between the vehicle badge and the surface 12 of the vehicle. The cover 22 is also made from a rubber material which returns to its original shape after being pressed.

Figure 2 shows the cover 22, with the annular outer web 24 and the central dome portion 26. In the example shown in Figure 2, there are four terminals 30 bonded to the inner surface of the cover 22. These terminals 30 may, for example, comprise carbon discs.

Figure 2 shows a vent 46, which comprises a channel defined in the web 24, and which enables air to be expelled from or drawn into the chamber containing the switch components. In use, the channel 46 is arranged to point downwardly to prevent water seeping into the chamber.

As shown in Figure 3, the printed circuit board 18 has four pairs of switch contacts, each one positioned to correspond to a respective terminal 30. In the example of Figure 3, the four pairs of contact terminals are in parallel. This enables electrical contacts to be made even when the switch is not actuated perfectly perpendicularly to the surface 12. Alternatively, each pair of switch contacts could relate to a different switch for different functions.

Figure 4 shows in plan view the assembled substrate 14 and cover 22. The shape of the substrate 14 corresponds to the desired vehicle badge design and has openings 50 corresponding to the location of the fastenings through the vehicle body panel.

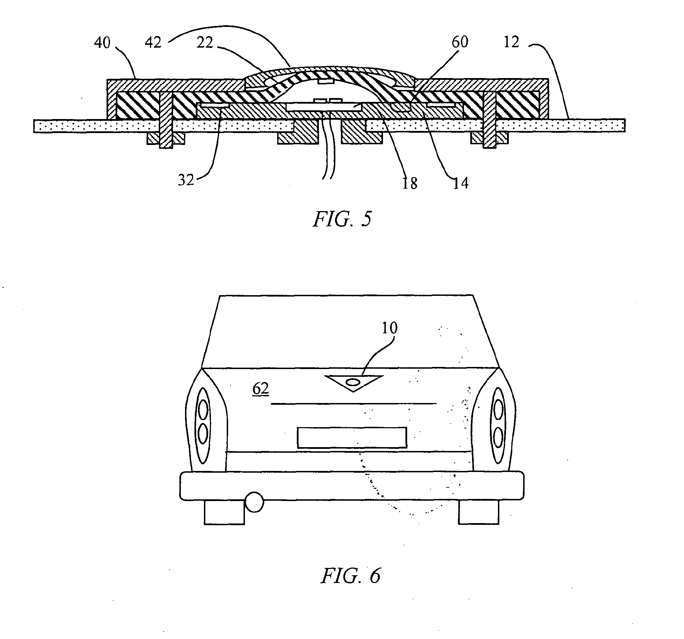

The web of the cover 22 is flush with the upper surface of the substrate 14, and the web is bonded into a recess. A good seal is required between the cover 22 and the substrate 14. An alternative arrangement is shown in Figure 5, which makes providing a sealed chamber easier.

Again, a substrate 14 receives the printed circuit board 18 in a recess. However, in this arrangement, the cover 22 extends laterally beyond the substrate 14 and thereby defines the larger area corresponding to the outer periphery of the badge shape. Essentially, the substrate 14 is received in a recess 60 in the lower surface of the cover 22. In this case, the cover 22 performs the sealing function between the vehicle body panel 12 and the vehicle badge 40, so that a sealed chamber is defined by the cover 22 alone.

In this arrangement, the substrate 14 can be made from a more rigid material than silicone rubber. This may avoid the need to provide a separate printed circuit board 18, and instead the circuit board may be replaced by conductive tracks deposited directly on the material of the substrate 14.

The chamber defined between the cover 22 and the substrate 14 again needs to be vented, and this may be through the cover 22 or else through the substrate 14.

Figure 6 shows a vehicle with the switch assembly 10 provided on the boot 62 for actuating the opening of the boot.

The thickness of the components in the figures has been exaggerated for the sake of clarity. In fact, the amount of displacement needed to actuate the switch will be very small and the thickness of the assembly can be kept to a minimum, to such an extent that the normal appearance of the vehicle badge can be maintained. For example, the total height of the switch arrangement above the surface 12 may be 5-15mm. The amount of movement of the cover 22 required to actuate the switch may typically be 1-3mm.

In the description and claims, the chamber housing the switch components is described as "sealed". Of course, venting of the chamber is required, so the chamber is not completely sealed, and the term sealed should be understood accordingly as indicating that liquid is unable enter into the chamber in normal use.

## Claims

1. A sealed switch arrangement for mounting on a surface, comprising:
a substrate;
a contact carrier mounted on the substrate and having at least one pair of switch contacts, electrical connections being made to the switch contacts through the substrate; and
a cover over the contact carrier and attached to the substrate to define a sealed chamber over the contact carrier, the cover having a deformable portion over the at least one pair of switch contacts and which carries a terminal, the deformable portion being movable such that the terminal can make or break electrical connection between the at least one pair of switch contacts.

2. An arrangement as claimed in claim 1, further comprising an outer casing provided over the cover.

3. An arrangement as claimed in claim 2, wherein the outer casing has an opening over the deformable portion of the cover, and wherein the arrangement further comprises a push pad provided over the deformable portion.

4. An arrangement as claimed in claim 2 or 3, wherein one of the cover and the substrate is formed from a resilient sealing material, the resilient sealing material extending between the outer casing and the surface thereby providing a seal between the outer casing and the surface.

5. An arrangement as claimed in any one of claims 2 to 4, wherein the outer casing comprises a vehicle badge.

6. An arrangement as claimed in claim 5, wherein the switch is for actuating the opening of the boot of a vehicle.

7. An arrangement as claimed in any one of the preceding claims, wherein the cover comprises an annular web, the deformable portion comprising a dome shaped portion supported by the web.

8. An arrangement as claimed in claim 7, wherein a vent channel is provided in the web to enable venting of the sealed chamber.

9. An arrangement as claimed in claim 8 when depending on claim 5, wherein the arrangement is for mounting on a non-horizontal surface, and wherein the vent channel in the web is located such that, once mounted, liquid is unable to accumulate inside the sealed chamber.

10. An arrangement as claimed in any one of the preceding claims, wherein the substrate is made from silicone rubber.

11. An arrangement as claimed in any one of the preceding claims, wherein the contact carrier comprises a printed circuit board.

12. An arrangement as claimed in claim 11, wherein the printed circuit board has a plurality of pairs of switch contacts, and the cover carries a corresponding number of terminals.

13. An arrangement as claimed in claim 11 or 12, wherein the printed circuit board is mounted in a first recess in the substrate, the electrical connections to the switch contacts passing through the substrate beneath the recess.

14. An arrangement as claimed in claim 13, wherein the substrate has a second recess corresponding in shape to the cover.

15. An arrangement as claimed in any one of the preceding claims, wherein the cover extends laterally beyond the substrate.

16. An arrangement as claimed in claim 15, wherein the substrate is received in a recess in the underside of the cover, such that the bottom surface of the substrate and the bottom surface of the cover, where the cover extends beyond the substrate, define a substantially continuous contact surface.

17. A vehicle having a boot and a vehicle badge on the boot, wherein the vehicle badge comprises a switch arrangement as claimed in any preceding claim for actuating the opening of the boot of the vehicle.
